# EUROPÄISCHE PATENTSCHRIFT

(11) **EP 2 922 145 B1**
(45) Veröffentlichungstag und Bekanntmachung des Hinweises auf die Patenterteilung: **07.10.2020**
(21) Anmeldenummer: 14003845.6
(22) Anmeldetag: 14.11.2014
(51) Int. Cl.: H01R 4/72, H01R 11/09, H01B 7/00, H01B 7/282, B60R 16/02, H02G 15/18, H01R 4/20, H01R 11/32

(54) **Verbindungsanordnung und entsprechendes Verfahren**
Connector assembly and corresponding method
Agencement de connexion et procédé correspondant

(30) Priorität: 20.03.2014 DE 102014003976
(43) Veröffentlichungstag der Anmeldung: 23.09.2015
(73) Patentinhaber: MAN Truck & Bus SE, 80995 München (DE)
(72) Erfinder: Kalass, Rainer, 91189 Rohr (DE)
(74) Vertreter: v. Bezold & Partner Patentanwälte - PartG mbB

(56) Entgegenhaltungen:
- EP-A1- 2 278 666
- WO-A2-2011/045328
- DE-A1- 3 412 786
- DE-A1-102008 026 352
- FR-A1- 2 921 206
- JP-A- H09 129 280
- US-A- 3 444 505
- US-A1- 2001 052 420

## Beschreibung

Die Erfindung betrifft eine Verbindungsanordnung zur elektrischen Verbindung von mindestens zwei Leitungsenden von elektrischen Leitungen (z.B. Litzenleitungen) und zur hermetischen Abdichtung zwischen den Leitungsenden. Weiterhin umfasst die Erfindung ein entsprechendes Verbindungsverfahren.

In modernen Kraftfahrzeugen (KFZ) mit einem Verbrennungsmotor wird der Kraftstoff (z.B. Benzin oder Diesel) in der Regel durch Injektoren (z.B. Piezoinjektoren, Magnetinjektoren) in die Brennräume des Verbrennungsmotors oder in eine Vorkammer eingespritzt. Die Ansteuerung der Injektoren erfolgt hierbei elektrisch über Injektorkabelstränge, die an die einzelnen Injektoren angeschlossen sind. Hierbei besteht das Problem, dass die Umgebung des Injektors medienbelastet ist (z.B. durch Öl oder Wasser), so dass die Gefahr besteht, dass das jeweilige Medium (z.B. Öl oder Wasser) in den Injektorkabelstrang eindringt und sich innerhalb des Injektorkabelstrangs in Längsrichtung ausbreitet. Es ist deshalb wichtig, dass bei einem Injektorkabelstrang das Eindringen von Medien (z.B. Öl oder Wasser) in den Injektorkabelstrang verhindert wird. Hierzu sind aus dem Stand der Technik Rohrkabelschuhe bekannt, die zum einen den Anschluss eines Injektorkabelstrangs an den zugehörigen Injektor ermöglichen und zum anderen auch eine Dichtfunktion haben. Nachteilig an diesen bekannten dichtenden Rohrkabelschuhen ist jedoch der relativ aufwendige und damit teure Fertigungsprozess.

Weiterhin ist zum Stand der Technik hinzuweisen auf DE 10 2008 026 352 A1 und DE 34 12 786 A1.

Ferner ist aus EP 2 278 666 A1 eine Verbindungsanordnung bekannt, die eine Verbindungshülse aufweist. Hierbei enthält die Verbindungshülse jedoch beitseitig männliche Steckverbinder, die durch eine Trennwand in der Verbindungshülse hindurchgeführt sind, wobei die Durchführung in der Trennwand eine Kriechstrecke für Feuchtigkeit bildet. Zur Vermeidung des Durchtretens von Feuchtigkeit ist hierbei ein Dichtmittel an der Trennwand angeordnet. Nachteilig an dieser bekannten Verbindungsanordnung ist die Möglichkeit des Eintretens von Feuchtigkeit von außen.

Zum technischen Hintergrund der Erfindung ist auch hinzuweisen auf US 3 444 505 A, WO 2011/045328 A2, JP H09 129280 A und US 2001/052420 A1.

Schließlich offenbart FR 2 921 206 A1 eine Verbindungsanordnung gemäß dem Oberbegriff von Anspruch 1 und ein entsprechendes Verfahren gemäß dem Oberbegriff von Anspruch 9.

Hierbei ist die Verbindungsanordnung jedoch empfindlich gegenüber Feuchtigkeit von außen.

Der Erfindung liegt deshalb die Aufgabe zu Grunde, eine entsprechend verbesserte Verbindungsanordnung und ein entsprechendes Verfahren zu schaffen.

Diese Aufgabe wird durch eine erfindungsgemäße Verbindungsanordnung gemäß dem Hauptanspruch und durch ein entsprechendes Verfahren gemäß dem Nebenanspruch gelöst:

Die Erfindung sieht eine Verbindungsanordnung vor, die zur elektrischen Verbindung von mindestens zwei Leitungsenden von elektrischen Leitungen (z.B. Litzenleitungen) dient und dabei eine hermetische Abdichtung zwischen den Leitungsenden herstellt, damit sich keine Medien (z.B. Öl, Wasser) entlang der Leitung ausbreiten können, was insbesondere bei einem Injektorkabelstrang in einem Kraftfahrzeug wichtig ist.

Die erfindungsgemäße Verbindungsanordnung weist zunächst eine Verbindungshülse zur Aufnahme der miteinander zu verbindenden Leitungsenden auf. Grundsätzlich ist eine solche Verbindungshülse bereits aus dem Stand der Technik (z.B. DE 34 12 786 A1) bekannt. Die erfindungsgemäße Verbindungshülse zeichnet sich jedoch durch mindestens eine erste Kammer auf, in die eines der Leitungsenden eingeführt werden kann, wobei die erste Kammer eine Trennwand zu dem anderen Leitungsende hin aufweist. Diese Verkammerung verhindert also, dass sich Medien (z.B. Öl, Wasser) entlang der Leitung ausbreiten, da die Kammer und insbesondere die Trennwand der Verbindungshülse eine hermetische Abdichtung bewirken.

In einem bevorzugten Ausführungsbeispiel der Erfindung weist die Verbindungshülse mindestens zwei Kammern auf, in die jeweils eines der Leitungsenden eingeführt wird, wobei die Trennwand die beiden Kammern der Verbindungshülse hermetisch voneinander trennt. Die Trennwand ist hierbei also zwischen den beiden Kammern angeordnet und verhindert einen Medienübertritt zwischen den Kammern.

In einem anderen Ausführungsbeispiel der Erfindung weist die Verbindungshülse dagegen nur eine einzige Kammer auf, in die eines der Leitungsenden eingeführt wird, während das andere Leitungsende ohne eine Verkammerung elektrisch angeschlossen wird. Bei diesem Ausführungsbeispiel wird also nur das eine Leitungsende abgedichtet angeschlossen, während das andere Leitungsende unabgedichtet ist. Beispielsweise kann diese unabgedichtete Seite der Verbindungshülse flach ausgeführt sein und eine Kuperfahne bilden, auf die dann von außen mehrere Litzen aufgeschweißt werden, beispielsweise durch ein Reibschweißverfahren. Auf dieser unabgedichteten Seite ist es dann unschädlich, wenn die Kontaktstelle mit Öl durchtränkt ist, da die Kammer der Trennwand eine hermetische Abdichtung bildet.

Die erfindungsgemäße Dichtungsanordnung kann also monodirektional (mit einer Kammer) oder bidirektional (mit zwei Kammern) abdichtend sein,

Gemäß der Erfindung ist in mindestens einer der Kammern der Verbindungshülse ein Dichtkörper angeordnet, der den Zwischenraum zwischen dem in die Kammer eingeführten Leitungsende und der Innenwand der Kammer abdichtet. So bildet sich nach dem Einführen eines Leitungsendes in die Kammer in der Regel ein Ringspalt zwischen der Innenwand der Kammer einerseits und der Mantelfläche des eingeführten Leitungsendes, wobei dieser Ringspalt dann von dem Dichtkörper abgedichtet wird, um einen axialen Durchtritt von Medien (z.B. Öl, Wasser) zu verhindern.

Bei dem bevorzugtem Ausführungsbeispiel ist der Dichtkörper dauerelastisch und kompensiert unterschiedliche materialspezifische Wärmeausdehnungskoeffizienten des Leitungsendes (z.B. Litzenleitung) einerseits und der Verbindungshülse andererseits. Der Dichtkörper drückt deshalb vorzugsweise mit einer radial ausgerichteten Vorspannkraft von innen nach außen gegen die Innenwand der Kammer und von außen radial nach innen auf die Mantelfläche des in die Kammer eingeführten Leitungsendes.

Hierbei ist zu erwähnen, dass der Dichtkörper vorzugsweise mindestens eine ringförmig umlaufende Dichtrippe aufweist, die an der Innenwand der Kammer anliegt. Beispielsweise kann der Dichtkörper drei oder vier ringförmig umlaufende Dichtrippen aufweisen, die in axialer Richtung hintereinander angeordnet sind.

Weiterhin ist zu erwähnen, dass der Dichtkörper vorzugsweise eine axial verlaufende Durchgangsbohrung aufweist, durch die das Leitungsende hindurch geführt wird.

Gemäß der Erfindung ist die Verbindungshülse selbst elektrisch leitfähig, um die beiden Leitungsenden elektrisch miteinander zu verbinden.

Ferner ist hierbei zu erwähnen, dass der Dichtkörper vorzugsweise einen axial hervorstehenden Anschlag aufweist, der zur Positionierung des Dichtkörpers in der Kammer dient. Vorzugsweise ist der Anschlag an dem Dichtkörper hierbei auf der Innenseite des Dichtkörpers angeordnet, d. h. auf der Seite des Dichtkörpers, die der Trennwand zugewandt und der Mündungsöffnung der Kammer abgewandt ist. Es besteht jedoch alternativ auch die Möglichkeit, dass der Anschlag des Dichtkörpers auf der Seite des Dichtkörpers angeordnet ist, die der Mündungsöffnung der Kammer zugewandt und der Trennwand der Verbindungshülse abgewandt ist.

Bei dem bevorzugtem Ausführungsbeispiel der Erfindung wird der Dichtkörper in der Kammer gegenüber einem axialen Herauswandern aus der Kammer formschlüssig fixiert. Hierbei besteht also eine formschlüssige Verbindung zwischen dem Dichtkörper einerseits und der Verbindungshülse mit der Kammer andererseits.

Beispielsweise kann die Verbindungshülse zum Verhindern eines Herauswanderns des Dichtkörpers aus der Kammer an ihrer Einführöffnung (Mündungsöffnung der Kammer) einen Kragen aufweisen, der radial nach innen ragt und den Dichtkörper dadurch formschlüssig in der Kammer fixiert.

Es besteht jedoch alternativ auch die Möglichkeit, dass der Dichtkörper und die Innenwand der Kammer Formschlusselemente aufweisen, die eine formschlüssige Fixierung des Dichtkörpers in der Kammer bewirken. Beispielsweise kann die Innenwand der Kammer mindestens eine ringförmig umlaufende Ringnut aufweisen, in die eine ringförmig umlaufende Dichtrippe eingreift und dadurch eine formschlüssige Verbindung zwischen der Ringnut und der ringförmig umlaufenden Dichtrippe stellt. Die Erfindung ist jedoch hinsichtlich der formschlüssigen Verbindung zwischen der Verbindungshülse und dem Dichtkörper auch mit anderen Formschlusselementen realisierbar.

In einem Ausführungsbeispiel der Erfindung ist der Dichtkörper mit einem Schlauch verbunden, der axial von dem Dichtkörper absteht und im montierten Zustand über die Außenwand der Verbindungshülse gestülpt ist, so dass der Schlauch die Verbindungshülse dann mantelförmig umgibt. Bei der Montage wird der Dichtkörper mit dem Schlauch dann zunächst in die Kammer eingeführt, wobei der Schlauch dann axial nach außen hervorsteht. Anschließend wird der Schlauch dann so umgestülpt, dass der Schlauch die Verbindungshülse außen mantelförmig umgibt. Hierbei ist der Schlauch vorzugsweise einstückig an den Dichtkörper angeformt, so dass Schlauch und Dichtkörper ein einheitliches Bauteil bilden. Weiterhin ist hierbei zu erwähnen, dass sich der an dem Dichtkörper angebrachte Schlauch im umgestülpten Zustand vorzugsweise über die gesamte Länge der Verbindungshülse erstreckt, um eine Außenabdichtung zu erreichen.

Darüber hinaus weist die erfindungsgemäße Verbindungsanordnung einen Schrumpfschlauch auf, der die Verbindungshülse und ggf. den an den Dichtkörper angebrachten Schlauch außen umgibt, vorzugsweise über die gesamte Länge der Verbindungshülse, um eine Außenabdichtung zu bewirken.

Als Schlauchmaterial dient hierbei ein elastisches Material (z.B. Gummi), damit ein Umstülpen des Schlauchs möglich ist und der Schlauch eng an der Verbindungsanordnung anliegt. Darüber hinaus ist das Schlauchmaterial elektrisch isolierend, flüssigkeitsdicht und/oder gasdicht. Es wurde bereits vorstehend kurz erwähnt, dass es sich bei dem Schlauch um einen Schrumpfschlauch handelt, der thermisch schrumpfbar ist, was an sich aus dem Stand der Technik bekannt ist und deshalb nicht näher beschrieben werden muss.

Die eigentliche Herstellung der elektrischen Verbindung zwischen den abisolierten Leitungsenden einerseits und der Verbindungshülse andererseits kann beispielsweise durch eine Crimpverbindung, eine Lötverbindung oder eine Schweißverbindung erfolgen. Hierbei ist auch zu erwähnen, dass die elektrische Verbindung zwischen den abisolierten Leitungsenden einerseits und der Verbindungshülse andererseits neben der elektrischen Verbindungsfunktion vorzugsweise auch eine Abdichtfunktion erfüllt, weshalb diese Verbindung vorzugsweise gasdicht ist.

Die zu verbindenden elektrischen Leitungen haben bis auf die abisolierten Leitungsendungen vorzugsweise einen Isolationsmantel aus Kunststoff, wie beispielsweise aus Ethylen-Tetrafluorethylen (ETFE) oder Polytetrafluorethylen (PTFE). Hierbei ist zu erwähnen, dass herkömmliche Schrumpfschläuche mit einem integrierten Schmelzkleber bei Hochtemperaturleitungen mit dem Isolationswerkstoff ETFE oder PTFE bisher keine dauerhafte Dichtheit erreichen konnten, da diese Isolationswerkstoffe andere Materialien grundsätzlich abweisen. Die erfindungsgemäße Verbindungsanordnung ermöglicht jedoch auch bei diesen Isolationswerkstoffen eine gute Dichtwirkung. Hierbei ist zu erwähnen, dass der Dichtkörper aus dem dauerelastischen Material das zugehörige Leitungsende im Bereich des Isolationsmantels umgeben kann, so dass der Dichtkörper außen auf dem Isolationsmantel aufliegt.

Dier Erfindung wurde vorstehend für eine Verbindungsanordnung beschrieben, die zwei Leitungsenden koaxial miteinander verbindet. Die Erfindung ist jedoch hinsichtlich der Anordnung der Leitungsenden nicht auf eine koaxiale Anordnung beschränkt. Darüber hinaus ist die Erfindung auch hinsichtlich der Anzahl der miteinander zu verbindenden Leitungsenden nicht auf zwei Leitungsendungen beschränkt, die miteinander verbunden werden. So kann die erfindungsgemäße Verbindungsanordnung bei einer entsprechenden Gestaltung auch mehr als zwei (z.B. drei, vier, fünf, sechs, sieben) Leitungsenden elektrisch miteinander verbinden. Hinsichtlich der geometrischen Anordnung der miteinander zu verbindenden Leitungsenden ist zu erwähnen, dass die erfindungsgemäße Verbindungsanordnung beispielsweise sternförmig, Y-förmig, H-förmig oder kammförmig sein kann, um nur einige Beispiele zu nennen.

Ferner ist zu erwähnen, dass die Erfindung nicht nur Schutz beansprucht für die vorstehend beschriebene erfindungsgemäße Verbindungsanordnung als einzelnes Bauteil. Darüber hinaus beansprucht die Erfindung nämlich auch Schutz für einen Injektorkabelstrang zur elektrischen Kontaktierung eines Injektors einer Einspritzanlage für einen Verbrennungsmotor (z.B. Dieselmotor) für ein Kraftfahrzeug (z.B. Nutzfahrzeug), wobei der erfindungsgemäße Injektorkabelstrang eine erfindungsgemäße Verbindungsanordnung aufweist.

Darüber hinaus beansprucht die Erfindung auch Schutz für einen Verbrennungsmotor (z.B. Dieselmotor, Benzinmotor) mit mindestens einem Injektor zur Kraftstoffeinspritzung und mit einem erfindungsgemäßen Injektorkabelstrang zur elektrischen Kontaktierung des Injektors.

Ferner beansprucht die Erfindung auch Schutz für ein Fahrzeug, insbesondere Nutzfahrzeug, mit einer erfindungsgemäßen Verbindungsanordnung.

Schließlich umfasst die Erfindung auch ein entsprechendes Verfahren zur elektrischen Verbindung von mehreren Leitungsenden, wobei sich die einzelnen Verfahrensschritte bereits aus der vorstehenden Beschreibung ergeben, so dass auf eine separate Beschreibung des erfindungsgemäßen Verfahrens verzichtet werden kann.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1A: eine Querschnittsansicht durch eine erfindungsgemäße Verbindungsanordnung, die beispielsweise in einem Injektorkabelstrang eingesetzt werden kann;
- Figur 1B: eine vergrößerte Einzelansicht eines Dichtkörpers aus der Verbindungsanordnung aus Figur 1A;
- Figur 2: eine Querschnittsansicht durch eine abgewandelte Verbindungsanordnung mit nur einer einzigen Kammer;
- Figur 3: eine Abwandlung der Verbindungsanordnung gemäß Figur 2, wobei an dem Dichtkörper ein Schlauch angeformt ist, der über die Verbindungsanordnung gestülpt ist und diese mantelförmig abdichtend umgibt,
- Figur 4: eine kammförmige Verbindungsanordnung,
- Figur 5: eine schematische Darstellung einer H-förmigen Verbindungsanordnung, sowie
- Figur 6: eine Y-förmige Verbindungsanordnung.

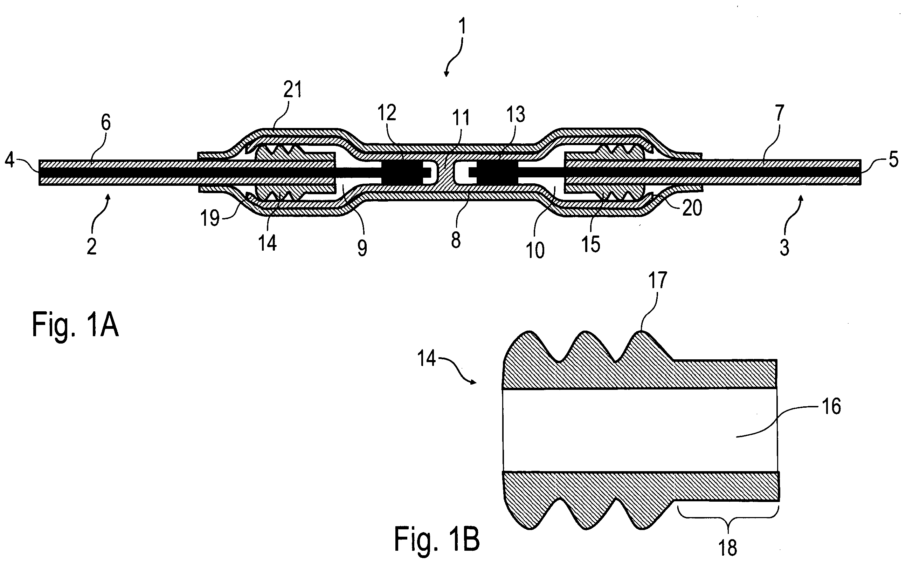

Die Figuren 1A und 1B zeigen eine erfindungsgemäße Verbindungsanordnung 1 zur elektrischen Verbindung von zwei Leitungsenden 2, 3, wobei die Verbindungsanordnung 1 beispielsweise Bestandteil eines Injektorkabelstrangs sein kann, der zur elektrischen Ansteuerung von Injektoren einer Einspritzanlage für einen Verbrennungsmotor dient.

Die beiden Leitungsenden 2, 3 weisen jeweils eine Litze 4 bzw. 5 aus Kupfer und einen Isolationsmantel 6 bzw. 7 aus Kunststoff (z.B. ETFE, PTFE) auf, wobei die freien Enden der beiden Leitungsenden 2, 3 abisoliert sind.

Die erfindungsgemäße Verbindungsanordnung 1 weist eine Verbindungshülse 8 aus einem elektrisch leitfähigen Material auf, wobei die Verbindungshülse 8 zwei Kammern 9, 10 aufweist, die durch eine Trennwand 11 voneinander getrennt sind.

Das Leitungsende 2 ist in die Kammer 9 eingeführt und mit seinem abisolierten freien Ende durch eine Crimpverbindung 12 mit der Verbindungshülse 8 verbunden.

Das andere Leitungsende 3 ist in die Kammer 10 der Verbindungshülse 8 eingeführt und durch eine Crimpverbindung 13 mit der Verbindungshülse 8 verbunden.

Zum einen stellen die beiden Crimpverbindungen 12, 13 eine elektrische Verbindung zwischen den Leitungsenden 2, 3 einerseits und der Verbindungshülse 8 andererseits her, wobei die Verbindungshülse 8 dadurch auch eine elektrische Verbindung zwischen den Leitungsenden 2, 3 herstellt, da die Verbindungshülse 8 selbst elektrisch leitfähig ist.

Zum anderen bewirken die Crimpverbindungen 12, 13 auch eine Abdichtung des Innenquerschnitts der Kammern 9 bzw. 10 im Bereich der Crimpverbindung 12 bzw. 13.

Darüber hinaus weist die erfindungsgemäße Verbindungsanordnung 1 in jeder der beiden Kammern 9, 10 jeweils einen Dichtkörper 14, 15 auf, der jeweils eine axiale Durchgangsbohrung 16 aufweist, durch die das Leitungsende 2 bzw. 3 hindurch geführt ist. Die Innenwand der Durchgangsbohrung 16 liegt also auf der äußeren Mantelfläche des Isolationsmantels 6 des Leitungsendes 2 auf.

Weiterhin ist zu erwähnen, dass die beiden Dichtkörper 14, 15 außen drei ringförmig umlaufende Dichtrippen 17 aufweisen, die an der Innenwand der Kammer 9 bzw. 10 anliegen und dadurch eine Dichtwirkung hervorrufen. Die Dichtrippen 17 sind hierbei in axialer Richtung voneinander beabstandet und bilden mehrere Dichtstufen.

Ferner ist zu erwähnen, dass die Dichtkörper 14, 15 dauerelastisch sind und Vorspannkräfte auf die Innenwand der Kammern 9 bzw. 10 ausüben, wodurch unterschiedliche materialspezifische Wärmeausdehnungskoeffizienten der Leitungsenden 2, 3 einerseits und der Verbindungshülse 8 andererseits ausgeglichen werden.

Die beiden Dichtkörper 14, 15 weisen jeweils einen Anschlag 18 auf, der in axialer Richtung von dem jeweiligen Dichtkörper 14 bzw. 15 absteht und zwar nach innen in Richtung der Trennwand 11 zwischen den beiden Kammern 9, 10.

Darüber hinaus ist zu erwähnen, dass die Dichtkörper 14, 15 durch eine formschlüssige Verbindung in den Kammern 9, 10 gehalten werden, wobei die formschlüssige Verbindung verhindert, dass die Dichtkörper 14, 15 aus den Kammern 9, 10 in axialer Richtung herauswandern. Diese formschlüssige Verbindung besteht im Wesentlichen aus einem Kragen 19, 20, der an der Mündungsöffnung der Kammern 9, 10 an den Mündungsrand der Verbindungshülse 8 angeformt ist und radial nach innen hervorspringt. Dieser Kragen 19, 20 weist einen Innendurchmesser auf, der kleiner ist als der Außendurchmesser des Dichtkörpers 14, 15, so dass der Kragen 19, 20 verhindert, dass der Dichtkörper 14, 15 axial aus den Kammern 9, 10 herauswandern kann.

Die erfindungsgemäße Verbindungsanordnung verhindert aufgrund der Verkammerungen insbesondere aufgrund der Trennwand 11, dass Medien (z.B. Öl, Wasser) in Längsrichtung der Leitung über die Verbindungsanordnung 1 hinwegwandern können. Es ist deshalb beispielsweise unschädlich, wenn innerhalb des Isolationsmantels 6 in dem Leitungsende 2 Öl oder Wasser eingedrungen ist, da dieses Medium von der Trennwand 11 blockiert wird und deshalb nicht in das andere Leitungsende 3 eindringen kann.

Schließlich ist noch zu erwähnen, dass die gesamte Verbindungsanordnung 1 außen von einem Schrumpfschlauch 21 mantelförmig umgeben ist, wobei der Schrumpfschlauch 21 thermisch auf die Verbindungsanordnung 1 aufgeschrumpft ist.

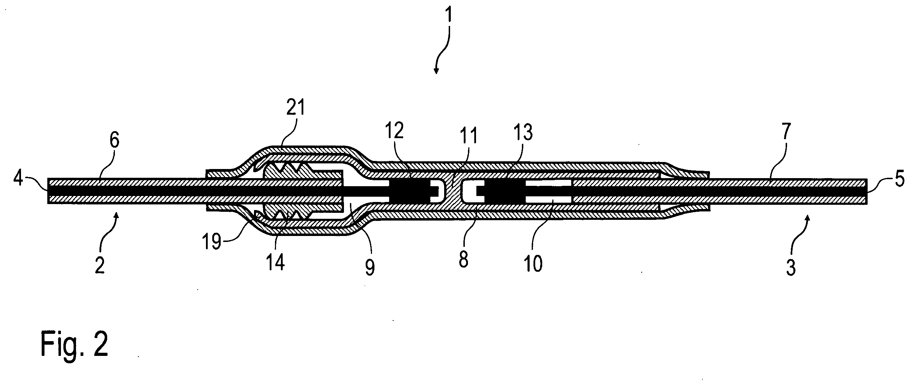

Das Ausführungsbeispiel gemäß Figur 2 stimmt weitgehend mit dem vorstehend beschriebenen und in Figur 1 dargestellten Ausführungsbeispiel überein, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass in der Kammer 10 der Verbindungsanordnung 8 kein Dichtkörper angeordnet ist.

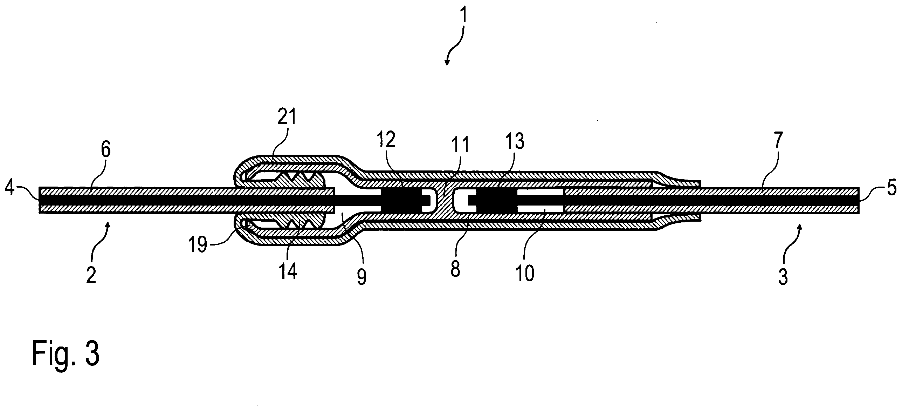

Figur 3 zeigt eine Abwandlung des Ausführungsbeispiels gemäß Figur 2, so dass zur Vermeidung von Wiederholungen wieder auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der Schrumpfschlauch 21 einstückig an den Dichtkörper 14 angeformt ist und zunächst axial von dem Dichtkörper 14 hervorsteht und aus der Kammer 9 herausragt. Der Schrumpfschlauch 21 ist dann in der Zeichnung nach rechts über die gesamte Verbindungsanordnung gestülpt und bildet dann eine äußere mantelförmige Abdichtung.

Darüber hinaus kann zusätzlich noch ein weiterer Schlauch vorgesehen sein, der den Schrumpfschlauch außen mantelförmig umgibt, wobei dieser weitere Schlauch in der Zeichnung jedoch nicht dargestellt ist.

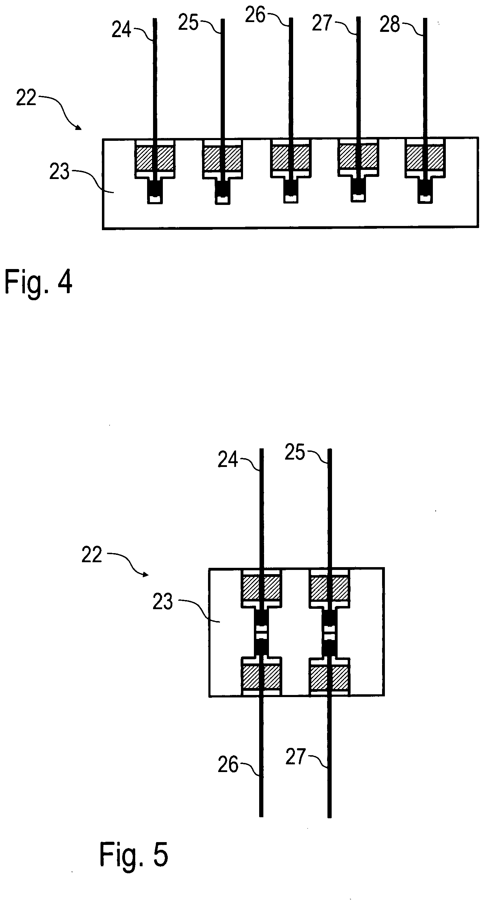

Figur 4 zeigt eine kammförmige erfindungsgemäße Verbindungsanordnung 22, mit einer Verbindungshülse 23 zur Verbindung von fünf Leitungsenden 24-28.

Hierbei münden die Leitungsenden 24-28 von derselben Seite ähnlich wie Zinken bei einem Kamm in die Verbindungshülse 23, wobei die Leitungsenden 24-28 jeweils von einer Kammer aufgenommen werden, wie bereits vorstehend beschrieben wurde, so dass zur Vermeidung von Wiederholungen auf die vorstehende Beschreibung verwiesen wird.

Figur 5 zeigt eine Abwandlung des Ausführungsbeispiels gemäß Figur 4, wobei die Leitungsenden 24-27 von verschiedenen Seiten H-förmig in die Verbindungshülse 23 münden.

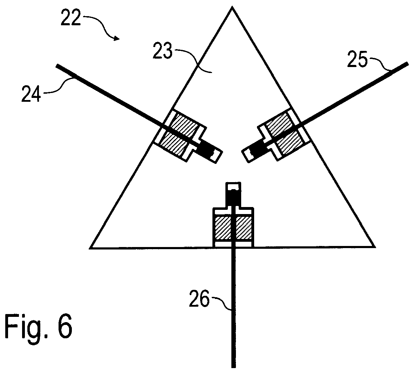

Schließlich zeigt Figur 6 eine weitere Abwandlung, wobei die verschiedenen Leitungsenden 24-26 Y-förmig in die Verbindungshülse 23 münden und dort in jeweils einer Kammer aufgenommen werden, wie bereits vorstehend beschrieben wurde.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Verbindungsanordnung
- 2: Leitungsende
- 3: Leitungsende
- 4: Litze
- 5: Litze
- 6: Isolationsmantel
- 7: Isolationsmantel
- 8: Verbindungshülse
- 9: Kammer der Verbindungshülse
- 10: Kammer der Verbindungshülse
- 11: Trennwand
- 12: Crimpverbindung
- 13: Crimpverbindung
- 14: Dichtkörper
- 15: Dichtkörper
- 16: Durchgangsbohrung
- 17: Dichtrippen
- 18: Anschlag
- 19: Kragen
- 20: Kragen
- 21: Schrumpfschlauch
- 22: Verbindungsanordnung
- 23: Verbindungshülse
- 24: Leitungsende
- 25: Leitungsende
- 26: Leitungsende
- 27: Leitungsende
- 28: Leitungsende

## Patentansprüche

1. Verbindungsanordnung (1; 22) zur elektrischen Verbindung von mindestens zwei Leitungsenden (2, 3; 24-28) von elektrischen Leitungen, die bis auf abisolierte Leitungsenden (2, 3) einen Isolationsmantel (6, 7) aufweisen, insbesondere von Litzenleitungen, und zur hermetischen Abdichtung zwischen den Leitungsenden (2, 3; 24-28), mit
a) einer Verbindungshülse (8; 23) zur Aufnahme der Leitungsenden, wobei
a1) die Verbindungshülse (8; 23) mindestens eine erste Kammer (9) aufweist zur Aufnahme von einem der Leitungsenden,
a2) die erste Kammer (9) eine Trennwand (11) zu dem anderen Leitungsende hin aufweist, und
a3) die Verbindungshülse (8; 23) elektrisch leitfähig ist, um die beiden Leitungsenden (2, 3) elektrisch miteinander zu verbinden, und
b) einem ersten Schlauch (21), der
b1) die Verbindungshülse (8; 23) über ihre gesamte Länge außen umgibt, um eine Außenabdichtung zu bewirken, und
b2) aus einem elastischen und elektrisch isolierenden Material besteht und als Schrumpfschlauch ausgebildet ist, der thermisch schrumpfbar ist,
**gekennzeichnet durch**
c) einen Dichtkörper (14, 15) in mindestens einer der Kammern (9, 10), wobei der Dichtkörper (14, 15)
c1) einen Zwischenraum zwischen dem in die Kammer (9, 10) eingeführten Leitungsende (2, 3) und der Innenwand der Kammer (9, 10) abdichtet und
c2) das zugehörige Leitungsende (2, 3) im Bereich des Isolationsmantels (6, 7) umgibt.

2. Verbindungsanordnung (1; 22) nach Anspruch 1, **dadurch gekennzeichnet, dass** die Verbindungshülse (8; 23) eine zweite Kammer (10) aufweist zur Aufnahme des anderen Leitungsendes (3), wobei die Trennwand (11) die beiden Kammern (9, 10) der Verbindungshülse (8; 23) hermetisch voneinander trennt.

3. Verbindungsanordnung (1; 22) nach einem der vorhergehenden Ansprüche,
**dadurch gekennzeichnet,**
a) **dass** der Dichtkörper (14, 15) dauerelastisch ist, und
b) **dass** der Dichtkörper (14, 15) mit einer Vorspannkraft von innen auf die Innenwand der Kammer drückt, und
c) **dass** der Dichtkörper (14, 15) eine Durchgangsbohrung (16) aufweist zur axialen Durchführung des Leitungsendes (2, 3).

4. Verbindungsanordnung (1; 22) nach Anspruch 3, **dadurch gekennzeichnet,**
a) **dass** der Dichtkörper (14, 15) in der Kammer (9, 10) gegenüber einem axialen Herauswandern formschlüssig fixiert ist, und
b) **dass** die Verbindungshülse (8; 23) an einer Einführöffnung zumindest einer der Kammern (9, 10) einen Kragen (19, 20) aufweist, der radial nach innen ragt und den Dichtkörper (14, 15) formschlüssig in der Kammer (9, 10) fixiert.

5. Verbindungsanordnung (22) nach einem der vorhergehenden Ansprüche, **dadurch gekennzeichnet, dass** die Verbindungsanordnung (22) mehr als zwei Leitungsenden (24-28) miteinander verbindet.

6. Injektorkabelstrang zur elektrischen Kontaktierung eines Injektors einer Einspritzanlage für einen Verbrennungsmotor für ein Kraftfahrzeug, mit einer Verbindungsanordnung (1; 22) nach einem der vorhergehenden Ansprüche.

7. Verbrennungsmotor mit mindestens einem Injektor zur Kraftstoffeinspritzung und mit einem Injektorkabelstrang nach Anspruch 6 zur elektrischen Kontaktierung des Injektors.

8. Fahrzeug mit einer Verbindungsanordnung (1; 22) nach einem der vorhergehenden Ansprüche 1 bis 5.

9. Verfahren zur elektrischen Verbindung von zwei Leitungsenden (2, 3) von elektrischen Leitungen, die bis auf abisolierte Leitungsenden (2, 3) einen Isolationsmantel (6, 7) aufweisen, insbesondere von Litzenleitungen, mit den folgenden Schritten:
a) Einführen der abisolierten Leitungsenden (2, 3) in eine elektrisch leitfähige Verbindungshülse (8; 23), wobei mindestens eines der Leitungsenden (2) in eine Kammer (9) der Verbindungshülse (8; 23) eingeführt wird, wobei die Kammer (9) durch eine Trennwand (11) zu dem anderen Leitungsende (3) hin abgedichtet ist, und
b) Herstellen einer elektrischen Verbindung zwischen den abisolierten Leitungsenden (2, 3),
c) Ummanteln der Verbindungshülse (8; 23) über ihre gesamte Länge mit einem ersten Schlauch (21), um eine Außenabdichtung zu bewirken, wobei der erste Schlauch (21) aus einem elastischen und elektrisch isolierenden Material besteht und als Schrumpfschlauch ausgebildet ist, der thermisch schrumpfbar ist,
**gekennzeichnet durch** folgenden Schritt:
d) Abdichten des Zwischenraums zwischen dem in die Kammer (9, 10) eingeführten Leitungsende (2, 3) im Bereich des Isolationsmantels (6, 7) und der Innenwand der Kammer (9, 10), mittels eines Dichtkörpers (14, 15), der in dem Zwischenraum zwischen dem in die Kammer (9, 10) eingeführten Leitungsende (2, 3) und der Innenwand der Kammer (9, 10) im Bereich des Isolationsmantels (6, 7) angeordnet wird.

10. Verfahren nach Anspruch 9, **dadurch gekennzeichnet, dass** die beiden Leitungsenden in jeweils eine Kammer (9, 10) der Verbindungshülse (8; 23) eingeführt werden, wobei die beiden Kammern (9, 10) der Verbindungshülse (8; 23) durch eine Trennwand (11) hermetisch voneinander getrennt sind.

11. Verfahren nach Anspruch 9 oder 10,
**gekennzeichnet durch** folgende Schritte:
a) Einführen des Dichtkörpers (14, 15) mit einem daran angebrachten zweiten Schlauch (21) in die Kammer (9) in der Verbindungshülse (8; 23), woraufhin der zweite Schlauch (21) axial nach außen aus der Kammer (9) heraus ragt, und anschließend
b) Umstülpen des aus der Kammer (9) heraus ragenden zweiten Schlauchs (21) über die Verbindungshülse (8; 23), so dass der zweite Schlauch (21) die Verbindungshülse (8; 23) mantelförmig umgibt.

## Claims

1. Connecting arrangement (1; 22) for electrically connecting at least two cable ends (2, 3; 24-28) of electrical cables which, apart from cable ends (2, 3) that have been stripped of insulation, comprise an insulating sheath (6, 7), in particular of stranded cables, and for providing a hermetic seal between the cable ends (2, 3; 24-28), having
a) a connection sleeve (8; 23) for receiving the cable ends, wherein
a1) the connection sleeve (8; 23) comprises at least a first chamber (9) for receiving one of the cable ends,
a2) the first chamber (9) comprises a partition wall (11) with respect to the other cable end, and
a3) the connection sleeve (8; 23) is electrically conductive in order to electrically connect the two cable ends (2, 3) to one another, and
b) a first tubing (21) which
b1) encompasses the outside of the connection sleeve (8; 23) over its entire length in order to produce an outer sealing arrangement, and
b2) consists of an elastic and electrically insulating material and is embodied as a shrink tubing that shrinks under the influence of heat,
**characterized by**
c) a sealing body (14, 15) in at least one of the chambers (9, 10), wherein the sealing body (14, 15)
c1) seals an intermediate chamber between the cable end (2, 3), which is inserted into the chamber (9, 10), and the inner wall of the chamber (9,10), and
c2) encompasses the associated cable end (2, 3) in the region of the insulating sheath (6, 7).

2. Connecting arrangement(1; 22) according to Claim 1, **characterized in that** the connection sleeve (8; 23) comprises a second chamber (10) for receiving the other cable end (3), wherein the partition wall (11) separates the two chambers (9, 10) of the connection sleeve (8; 23) from one another in a hermetically sealed manner.

3. Connecting arrangement (1; 22) according to one of the preceding claims, **characterized in**:
a) **that** the sealing body (14, 15) is permanently elastic, and
b) **that** the sealing body (14, 15) presses with a prestressing force from inside on the inner wall of the chamber, and
c) **that** the sealing body (14, 15) comprises a throughgoing bore (16) for the axial feedthrough of the cable end (2, 3).

4. Connecting arrangement (1; 22) according to Claim 3, **characterized in**
a) **that** the sealing body (14, 15) is fixed in a positive locking manner in the chamber (9, 10) with respect to displacing in the axial direction, and
b) **that** the connection sleeve (8; 23) comprises at an insertion opening of at least one of the chambers (9, 10) a collar (19, 20) that protrudes radially inwards and fixes the sealing body (14, 15) in a positive locking manner in the chamber (9, 10).

5. Connecting arrangement (22) as claimed in one of the preceding claims, **characterized in that** the connecting arrangement (22) connects more than two cable ends (24-28) to one another.

6. Injector cable loom for electrically contacting an injector of an injection system for a combustion engine for a motor vehicle, having a connecting arrangement (1; 22) according to one of the preceding claims.

7. Internal combustion engine having at least one injector for injecting fuel and having an injector cable loom according to Claim 6 for electrically contacting the injector.

8. Vehicle having a connecting arrangement (1; 22) according to one of the preceding Claims 1 to 5.

9. Method for electrically connecting two cable ends (2, 3) of electrical cables which, apart from cable ends (2, 3) that have been stripped of insulation, comprise an insulating sheath (6, 7), in particular of stranded cables, said method comprising the following steps:
a) inserting into an electrical conductive connection sleeve (8; 23) the cable ends (2, 3) that have been stripped of insulation, wherein at least one of the cable ends (2) is inserted into a chamber (9) of the connection sleeve (8; 23), wherein the chamber (9) is sealed by means of a partition wall (11) with respect to the other cable end (3), and
b) establishing an electrical connection between the cables ends (2, 3) that have been stripped of insulation,
c) sheathing the connection sleeve (8; 23) over its entire length with a first tubing (21) in order to produce an outer sealing arrangement, wherein the first tubing (21) consists of an elastic and electrically insulating material and is embodied as a shrink tubing that shrinks under the influence of heat,
**characterized by** the following step:
d) sealing the intermediate chamber between the cable end (2, 3), which is inserted into the chamber (9, 10), in the region of the insulating sheath (6, 7) and the inner wall of the chamber (9,10) by means of a sealing body (14, 15) that is arranged in the intermediate chamber between the cable end (2, 3), which is inserted into the chamber (9, 10), and the inner wall of the chamber (9,10) in the region of the insulating sheath (6, 7).

10. Method according to Claim 9, **characterized in that** the two cable ends are inserted in each case into a chamber (9, 10) of the connection sleeve (8; 23), wherein the two chambers (9, 10) of the connection sleeve (8; 23) are hermetically sealed from one another by means of a partition wall (11).

11. Method according to Claim 9 or 10, **characterized by** the following steps:
a) inserting the sealing body (14, 15) having a second tubing (21) attached thereto into the chamber (9) in the connection sleeve (8; 23), following which the second tubing (21) protrudes axially outwards out of the chamber (9) and subsequently
b) folding the second tubing (21) that is protruding out of the chamber (9) over the connection sleeve (8; 23) so that the second tubing (21) encompasses the connection sleeve (8; 23) in the form of a sheath.

## Revendications

1. Agencement de connexion (1 ; 22) pour la connexion électrique d'au moins deux extrémités (2, 3 ; 24-28) de câbles électriques qui, à l'exception des extrémités de câble dénudées (2, 3), comportent une gaine d'isolation (6, 7), en particulier de câbles toronnés, et pour l'étanchéité hermétique entre les extrémités de câble (2, 3 ; 24-28), comprenant
a) un manchon de connexion (8 ; 23) pour recevoir les extrémités de câble, dans lequel
a1) le manchon de connexion (8 ; 23) comporte au moins une première chambre (9) pour recevoir l'une des extrémités de câble,
a2) la première chambre (9) comporte une paroi de séparation (11) vis-à-vis de l'autre extrémité de câble, et
a3) le manchon de connexion (8 ; 23) est électriquement conducteur afin de relier électriquement l'une à l'autre les deux extrémités de câble (2, 3), et
b) un premier tube (21) qui
b1) entoure extérieurement le manchon de connexion (8 ; 23) sur toute sa longueur afin de réaliser une étanchéité extérieure, et
b2) est constitué d'un matériau élastique et électriquement isolant et est réalisé sous la forme d'un tube rétractable qui est thermorétractable,
**caractérisé par**
c) un corps d'étanchéité (14, 15) dans au moins l'une des chambres (9, 10), dans lequel le corps d'étanchéité (14, 15)
c1) étanchéifie un espace intermédiaire entre l'extrémité de câble (2, 3) introduite dans la chambre (9, 10) et la paroi intérieure de la chambre (9, 10) et
c2) entoure l'extrémité de câble (2, 3) associée dans la zone de la gaine d'isolation (6, 7).

2. Agencement de connexion (1 ; 22) selon la revendication 1, **caractérisé en ce que** le manchon de connexion (8 ; 23) comporte une deuxième chambre (10) pour recevoir l'autre extrémité de câble (3), dans lequel la paroi de séparation (11) sépare hermétiquement l'une de l'autre les deux chambres (9, 10) du manchon de connexion (8 ; 23).

3. Agencement de connexion (1 ; 22) selon l'une des revendications précédentes,
**caractérisé**
a) **en ce que** le corps d'étanchéité (14, 15) est élastique en permanence, et
b) **en ce que** le corps d'étanchéité (14, 15) exerce une pression de précontrainte depuis l'intérieur contre la paroi intérieure de la chambre, et
c) **en ce que** le corps d'étanchéité (14, 15) comporte un trou traversant (16) pour le passage axial de l'extrémité de câble (2, 3).

4. Agencement de connexion (1 ; 22) selon la revendication 3, **caractérisé**
a) **en ce que** le corps d'étanchéité (14, 15) est fixé par complémentarité de forme dans la chambre (9, 10) pour empêcher tout déplacement axial, et
b) **en ce que** le manchon de connexion (8 ; 23) comporte, au niveau d'une ouverture d'insertion d'au moins l'une des chambres (9, 10), une collerette (19, 20) qui fait saillie radialement vers l'intérieur et qui fixe par complémentarité de forme le corps d'étanchéité (14, 15) dans la chambre (9, 10).

5. Agencement de connexion (22) selon l'une des revendications précédentes, **caractérisé en ce que** l'agencement de connexion (22) connecte les unes aux autres plus de deux extrémités de câble (24-28).

6. Faisceau de câbles d'injecteur pour le contact électrique d'un injecteur d'un système d'injection pour moteur à combustion interne d'un véhicule automobile, comportant un agencement de connexion (1 ; 22) selon l'une des revendications précédentes.

7. Moteur à combustion interne comprenant au moins un injecteur pour l'injection de carburant et un faisceau de câbles d'injecteur selon la revendication 6 pour le raccordement électrique de l'injecteur.

8. Véhicule comprenant un agencement de connexion (1 ; 22) selon l'une des revendications 1 à 5 précédentes.

9. Procédé de connexion électrique de deux extrémités de câble (2, 3) de câbles électriques qui, à l'exception des extrémités de câble dénudées (2, 3), comportent une gaine d'isolation (6, 7), en particulier de câbles toronnés, comprenant les étapes suivantes :
a) insertion des extrémités de câble dénudées (2, 3) dans un manchon de connexion (8 ; 23) électriquement conducteur, dans lequel au moins l'une des extrémités de câble (2) est insérée dans une chambre (9) du manchon de connexion (8 ; 23), dans lequel la chambre (9) est étanchéifiée par une paroi de séparation (11) vis-à-vis de l'autre extrémité de câble (3), et
b) établissement d'une connexion électrique entre les extrémités de câble dénudées (2, 3),
c) gainage du manchon de connexion (8 ; 23) sur toute sa longueur avec un premier tube (21) afin de réaliser une étanchéité extérieure, dans lequel le premier tube (21) est constitué d'un matériau élastique et électriquement isolant et est réalisé sous la forme d'un tube rétractable qui est thermorétractable,
**caractérisé par** l'étape suivante :
d) étanchéification de l'espace intermédiaire entre l'extrémité de câble (2, 3) introduite dans la chambre (9, 10) dans la zone de la gaine d'isolation (6, 7) et la paroi intérieure de la chambre (9, 10), au moyen d'un corps d'étanchéité (14, 15) qui est disposé dans l'espace intermédiaire entre l'extrémité de câble (2, 3) introduite dans la chambre (9, 10) et la paroi intérieure de la chambre (9, 10) dans la zone de la gaine d'isolation (6, 7).

10. Procédé selon la revendication 9, **caractérisé en ce que** les deux extrémités de câble sont respectivement introduites dans une chambre (9, 10) du manchon de connexion (8 ; 23), dans lequel les deux chambres (9, 10) du manchon de connexion (8 ; 23) sont séparées hermétiquement l'une de l'autre par une paroi de séparation (11).

11. Procédé selon la revendication 9 ou 10, **caractérisé par** les étapes suivantes :
a) introduction du corps d'étanchéité (14, 15) avec un deuxième tube (21) fixé sur celui-ci dans la chambre (9) du manchon de connexion (8 ; 23), le deuxième tube (21) faisant alors saillie axialement vers l'extérieur de la chambre (9), puis
b) retournement du deuxième tube (21) faisant saillie hors de la chambre (9) sur le manchon de connexion (8 ; 23) de manière à ce que le deuxième tube (21) entoure le manchon de connexion (8 ; 23) sous la forme d'une gaine.
